# EUROPEAN PATENT SPECIFICATION

(11) **EP 4 555 394 B1**
(45) Date of publication and mention of the grant of the patent: **06.05.2026**
(21) Application number: 22790119.6
(22) Date of filing: 21.09.2022
(51) Int. Cl.: G06F 1/28, G06F 1/26, G06F 1/16, H02J 7/60, H02J 7/80

(54) **DETECTING A SOFT SHORT CIRCUIT AT A CHARGING INTERFACE OF AN ELECTRONIC DEVICE**
ERKENNUNG EINES WEICHEN KURZSCHLUSSES AN EINER LADESCHNITTSTELLE EINER ELEKTRONISCHEN VORRICHTUNG
DÉTECTION D'UN COURT-CIRCUIT DOUX AU NIVEAU D'UNE INTERFACE DE CHARGE D'UN DISPOSITIF ÉLECTRONIQUE

(43) Date of publication of application: 21.05.2025
(73) Proprietor: Google LLC, Mountain View, CA 94043 (US)
(72) Inventor: GODIL, Ajmal, Mountain View, CA 94043 (US); SMITH, Conrad, Mountain View, CA 94043 (US)
(74) Representative: Maikowski & Ninnemann Patentanwälte Partnerschaft mbB
(86) International application number: PCT/US2022/044217
(87) International publication number: WO 2024/063763

(56) References cited:
- US-A1- 2015 346 127
- US-A1- 2016 019 773
- US-A1- 2017 346 313
- US-A1- 2022 224 128
- US-B1- 9 295 403

## Description

### FIELD

The present disclosure relates generally to electronic devices having an energy storage device (e.g., rechargeable battery). More particularly, the present disclosure relates to a method for detecting a virtual short at a charging interface of an electronic device.

### BACKGROUND

Electronic devices (e.g., smartphones, smartwatches, laptops, tablets, etc.) can include a rechargeable battery that provides direct current power to electronic components thereof. For instance, the rechargeable battery can be disposed within a housing of the electronic devices. Furthermore, the electronic devices can include a charging interface (e.g., charging port) to facilitate coupling the rechargeable battery to an external power supply (e.g., wall outlet) via a charging cable. In this manner, the electronic device can draw a charging current from the external power supply to charge the rechargeable battery.

US 2016/0019773 A1 relates to an electronic device including a port for connecting the electronic device to other electronic devices and a moisture detector configured to detect an electrically conductive liquid in the first port. The moisture detector is configured to maintain a voltage on a first electrical contact of the port and to detect a short circuit between the first electrical contact and a second electrical contact of the port. The moisture detector determines that the electronic device has been exposed to an electrically conductive liquid if the monitor module detects the short circuit. The moisture detector may also put the electronic device into safe mode if it is exposed to an electrically conductive liquid.

US 2022/0224128 A1 relates to an electronic device powered by one or more rechargeable battery cells. The electronic device includes a first negative temperature coefficient (NTC) thermistor proximate to the battery cells, and an open capacitor coupled in parallel with the NTC thermistor. The open capacitor has an open area and two electrodes that are at least partially exposed via the open area and electrically isolated. The electronic device further includes a control circuit coupled to the NTC thermistor and the open capacitor. The control circuit is configured to detect a voltage drop across the NTC thermistor and the open capacitor if conductive liquid enters the open area of the capacitor and electrically connects the two electrodes that are at least partially exposed via the open area.

### SUMMARY

Aspects and advantages of embodiments of the present disclosure will be set forth in part in the following description, or can be learned from the description, or can be learned through practice of the embodiments.

In one aspect, a computer-implemented method for detecting a soft short circuit at a charging interface of an electronic device, according to claim 1, is provided. The method includes obtaining, via one or more processors, an initial voltage measurement of a voltage reference that is electrically coupled to the charging interface of the electronic device. The method includes obtaining, via the one or more processors, an additional voltage measurement of the voltage reference. The method includes detecting, via the one or more processors, the soft short circuit at the charging interface based, at least in part, on the initial voltage measurement and the additional voltage measurement. The method includes causing, via the one or more processors, the electronic device to perform one or more control actions in response to detecting the soft short circuit at the charging interface of the electronic device.

In the present invention, detecting the soft short circuit includes determining, via the one or more processors, the additional voltage measurement of the voltage reference is less than the initial voltage measurement by a threshold amount that is indicative of existence of the soft short circuit at the charging interface. In some implementations, the threshold amount is at least 0.5 Volts.

In some implementations, causing the electronic device to perform one or more control actions includes automatically, via the one or more processors, powering down the electronic device.

In some implementations, causing the electronic device to perform one or more control actions includes causing, via the one or more processors, a display screen of the electronic device to display a notification to prompt a user to perform a maintenance action on the electronic device. In some implementations, the maintenance action includes manually powering down the electronic device.

In some implementations, obtaining the initial voltage measurement and obtaining the additional voltage measurement occur while a rechargeable battery of the electronic device is not being charged via an external power supply.

In some implementations, the soft short circuit corresponds to a resistance ranging from 2 ohms to 100 ohms.

The method further includes storing, via the one or more processors, the initial voltage measurement in one or more memory devices.

In some implementations, the electronic device is a wearable computing device.

In another aspect, an electronic device, according to claim 9, is provided. The electronic device includes an energy storage device and charging interface configured to electrically couple an external power supply to the energy storage device. The electronic device further includes a power management circuit. The power management circuit includes a voltage reference that is electrically couplable to the charging interface. The electronic device includes one or more processors configured to obtain an initial voltage measurement of the voltage reference whole the voltage reference is electrically coupled to the charging interface. The one or more processors are further configured to obtain an additional voltage measurement of the voltage reference. The one or more processors are configured to detect a soft short circuit at the charging interface based, at least in part, on the initial voltage measurement of the voltage reference and the additional voltage measurement of the voltage reference. The one or more processors are configured to cause the electronic device to perform one or more control actions in response to detecting the soft short circuit at the charging interface of the electronic device.

In some implementations, the power management circuit includes a switching device electrically coupled between the voltage reference and the charging interface. The switching device is configured to selectively couple the voltage reference to the charging interface. In some implementations, the switching device is a transistor.

In the present invention, to detect the soft short circuit at the charging interface the one or more processors are configured to determine the additional voltage measurement of the voltage reference is less than the initial voltage measurement of the voltage reference by a threshold amount indicative of existence of the soft short circuit.

In some implementations, the one or more control actions include automatically powering down the electronic device.

In some implementations, the electronic device further includes a display screen. Furthermore, in such implementations, the one or more control actions include causing the display screen to display a notification to prompt the user to perform a maintenance action on the electronic device. In some implementations, the maintenance action includes manually powering down the electronic device.

In some implementations, the one or more processors are configured to obtain the initial voltage measurement and the additional voltage measurement while the energy storage device is not being charged via the external power supply.

In some implementations, the charging interface includes a universal serial bus (USB) charging port.

In some implementations, the energy storage device includes a rechargeable battery.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
FIG. 1 depicts an external power supply coupled to an electronic device according to some implementations of the present disclosure.
FIG. 2 depicts a schematic of a power interface of an electronic device according to some implementations of the present disclosure.
FIG. 3 depicts a soft short circuit at a charging interface of an electronic device according to some implementations of the present disclosure.
FIG. 4 depicts a flow diagram of a method for detecting a soft short circuit at a charging interface of an electronic device according to some implementations of the present disclosure.
FIG. 5 depicts a perspective view of an electronic device according to some implementations of the present disclosure.
FIG. 6 depicts a cross-sectional view of a wearable computing device according to some implementations of the present disclosure.
FIG. 7 depicts a rear view of the electronic device of FIG. 5 according to some implementations of the present disclosure.
FIG. 8 depicts a block diagram of components of the electronic device of FIG. 5 according to some implementations of the present disclosure.

### DETAILED DESCRIPTION

Reference now will be made in detail to embodiments of the present disclosure, one or more examples of which are illustrated in the drawings. Each example is provided by way of explanation of the present disclosure, not limitation of the present disclosure. In fact, it will be apparent to those skilled in the art that various modifications and variations can be made in the present disclosure without departing from the scope of the disclosure. For instance, features illustrated or described as part of one embodiment can be used with another embodiment to yield a still further embodiment. Thus, it is intended that the present invention covers such modifications and variations as come within the scope of the appended claims.

Example aspects of the present disclosure are directed to electronic devices having an energy storage device (e.g., rechargeable battery) that provides direct current power to various electronics (e.g., sensors, processors, display, etc.) thereof. For example, an electronic device according to the present disclosure can include a wearable computing device capable of being worn, for instance, on the arm of a user. The wearable computing device can include a charging interface capable of being coupled to an external power supply (e.g., wall charger, laptop, etc.) via a conductor (e.g., charging cable). In this manner, the wearable computing device can draw a charging current from the external power supply to charge the energy storage device.

The charging interface can include a voltage input (e.g., V_{BUS}) and electrical ground (e.g., GND). A soft short circuit can develop over time between the voltage input and the electrical ground. For instance, the soft short circuit can develop due to water ingress into the interior of a housing of the electronic device at an opening for the charging interface. As another example, the soft short circuit can be caused by breakdown of solder joints for a capacitor that is electrically coupled between the voltage input and the electrical ground. As used herein, a "soft short circuit" refers to a resistance between the voltage input and the electrical ground that is non-zero. For instance, in some implementations, the soft short circuit can range from 2 ohms to 100 ohms.

The soft short circuit at the charging interface of the electronic device can cause a high, uncontrolled current to flow through the electronic device when the electronic device is coupled to the external power supply. The high, uncontrolled current flowing through the electronic device can be problematic. For instance, the high, uncontrolled current can cause the electronic device to heat up to a temperature that is unsafe.

Example aspects of the present disclosure are directed to detecting presence of a soft short circuit at the charging interface of the electronic device. The electronic device can include a power management circuit that is configured to control charging of the energy storage device. The power management circuit can include a voltage reference that is electrically coupled to the charging interface. The electronic device can include a processor configured to read the voltage reference. The processor can obtain an initial voltage measurement of the voltage reference. For instance, the processor can obtain the initial voltage measurement of the voltage reference before the electronic device leaves the factory. At this time, the initial voltage measurement should correspond to the voltage the voltage reference is configured to provide since no soft short circuit exists at the charging interface. After the electronic device leaves the factory, the processor can obtain a plurality of additional voltage measurements of the voltage reference. In some implementations, the processor can be configured to obtain the plurality of additional voltage measurements at predetermined intervals of time. For instance, in some implementations, the processor can be configured to obtain an additional voltage measurement once a day. In alternative implementations, the processor can be configured to obtain additional voltage measurements more or less frequently.

It should be understood that the voltage measurements can be stored in one or more memory devices. For instance, in some implementations, the electronic device can include one or more memory devices, and the processor can be configured to write the voltage measurements to the one or more memory devices. In some implementations, the initial voltage measurement can be stored at a first location (e.g., memory cell) of the one or more memory devices. Additionally, the additional voltage measurements can be stored at a second location (e.g., memory cell) of the one or more memory devices that is different from the first location. In some implementations, the processor can be configured to write each of the plurality of additional voltage measurements to a different memory cell of the one or more memory devices. In alternative implementations, the processor can overwrite the same memory cell with the most recent voltage measurement of the plurality of additional voltage measurements. In this manner, memory space on the one or more memory devices of the electronic device can be conserved.

The processor can be configured to detect a soft short circuit at the charging interface based on the initial voltage measurement and the most recent voltage measurement of the plurality of additional measurements. For instance, the processor can be configured to detect the soft short circuit when the most recent voltage measurement is less than the initial voltage measurement by a threshold amount. In some implementations, the initial voltage measurement can be 1 Volt and the threshold amount can be 0.5 Volt. Thus, in such implementations, the processor can detect the soft short circuit when the most recent voltage measurement of the additional voltage measurements of the voltage reference is 0.5 Volts or less.

The processor can be configured to perform one or more control actions in response to detecting the soft short circuit at the charging interface. For instance, in some implementations, the one or more control actions can include automatically powering down the electronic device. In alternative implementations, the processor can be configured to cause a display screen of the electronic device to display a notification to prompt a user to perform a maintenance action on the electronic device. In some implementations, the maintenance action can include taking the electronic device to an authorized technician. Additionally, the maintenance action can include manually powering down the electronic device.

An electronic device according to example aspects of the present disclosure can provide numerous technical effects and benefits. For instance, the electronic device can detect a soft short circuit at the charging interface thereof and perform one or more control actions in response to detecting the soft short circuit to safeguard the electronic device against high, uncontrolled currents that can occur when the electronic device is being charged via the external power supply.

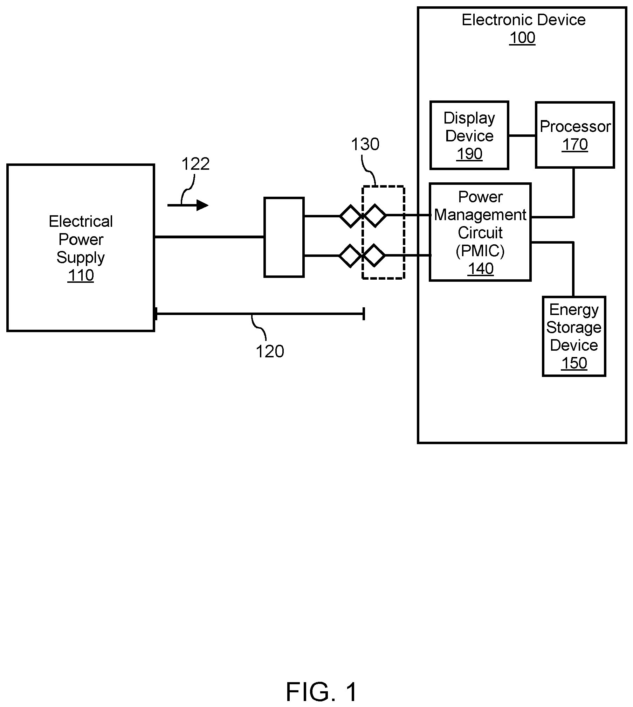

Referring now to the FIGS., FIG. 1 depicts an electronic device 100 coupled to an external power supply 110 via a conductor 120 according to some implementations of the present disclosure. The external power supply 110 can, in some implementations, be an alternating current (AC) wall outlet. In alternative implementations, the external power supply 110 can include another electronic device (e.g., laptop) configured to output direct current (DC) power.

It should be understood that the conductor 120 can provide an electrical path from the external power supply 110 (e.g., an alternating current wall outlet e.g., about a 120V AC wall outlet, USB charging source, or other suitable power source) to the electronic device 100. In this manner, the electronic device 100 can draw a charging current 122 from the external power supply 110. In some implementations, the conductor 120 can be a charging cable. For instance, in some implementations, the charging cable can include a universal serial bus (USB) charging cable. It should be understood, however, that the charging cable can include any suitable type of charging cable.

The electronic device 100 can include a charging interface 130. The charging interface 130 can couple the electronic device 100 to an end of the conductor 120. In some implementations, the charging interface 130 can include a plurality of charging pins that can each electrically couple to a corresponding contact of the conductor 120. In alternative implementations, the charging interface 130 can include a charging port into which the end of the conductor 120 is inserted. Other suitable charging interfaces can be used without deviating from the scope of the present disclosure.

The electronic device 100 can include a power management circuit 140. The power management circuit 140 can be electrically coupled between the charging interface 130 and an energy storage device 150 of the electronic device 100. In some implementations, the energy storage device 150 can include a rechargeable battery. The power management circuit 140 can be configured to control charging of the energy storage device 150. In some implementations, the power management circuit 140 can be implemented as an integrated circuit.

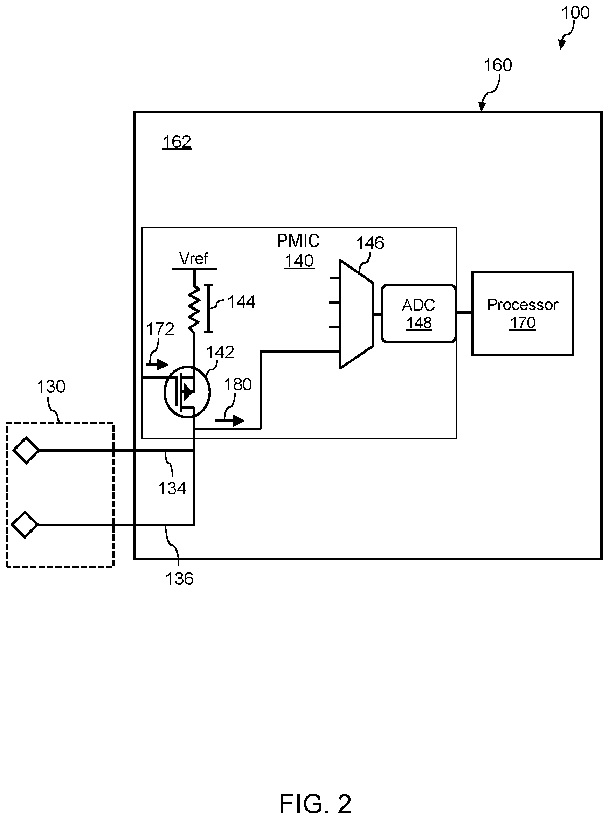

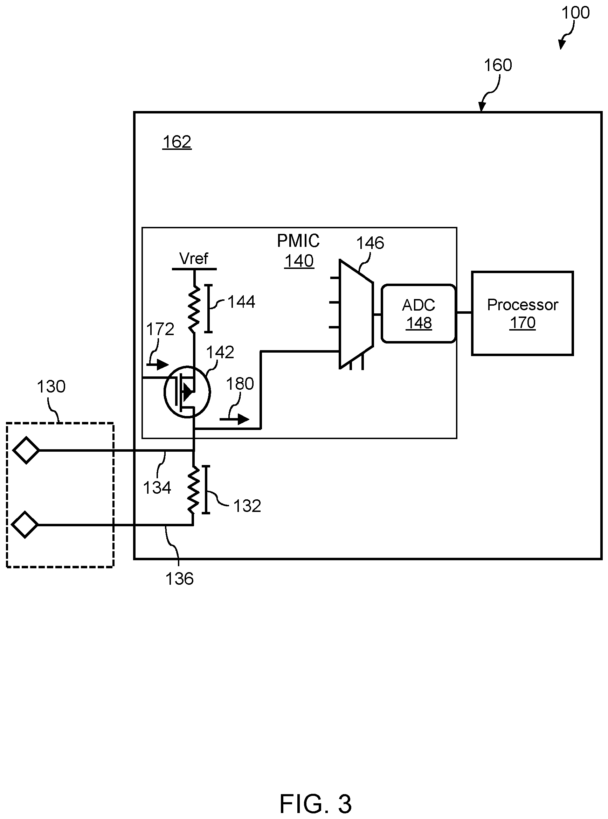

Referring now to FIGS. 2 and 3, the power management circuit 140 can be positioned within a housing 160 of the electronic device 100. For instance, the power management circuit 140 can be positioned within an interior 162 defined by the housing 160. As shown, the power management circuit 140 can include a voltage reference V_{REF}. For instance, in some implementations, the voltage reference V_{REF} can be a 1 Volt reference. It should be understood, however, that the voltage reference V_{REF} can have any suitable voltage.

The power management circuit 140 can include a switching device 142 electrically coupled between the voltage reference V_{REF} and a voltage input 132 of the charging interface 130. In some implementations, the switching device 142 can include a transistor (e.g., metal oxide semiconductor field effect transistor (MOSFET), bipolar junction transistor (BJT), etc.). The power management circuit 140 can further include a resistor 144 electrically coupled between the switching device 142 and the voltage reference V_{REF}. In some implementations, the resistor 144 can have a resistance ranging from about 800 Ohms to about 2 kilohms. It should be understood, however, that the resistor 144 can have any suitable resistance value.

The electronic device 100 can include a processor 170 that is communicatively coupled to the power management circuit 140 of the electronic device 100. In this manner, the processor 170 can obtain a voltage measurement of the voltage reference V_{REF} when the voltage reference V_{REF} is electrically coupled to the charging interface 130 via the switching device 142. For instance, the processor 170 can provide a driving signal 172 to the switching device 142 to electrically couple the voltage reference V_{REF} to the charging interface 130, specifically the voltage input 132 of the charging interface 130.

In some implementations, the power management circuit 140 can include a multiplexer 146 having a plurality of inputs and a single output. For instance, one of the plurality of inputs of the multiplexer 146 can include an analog signal 180 indicative of the voltage of the voltage reference V_{REF} when the voltage reference V_{REF} is electrically coupled to the voltage input 132 of the charging interface 130 via the switching device 142. Thus, the single output of the multiplexer 146 can be the analog signal 180 when the processor 170 provides the driving signal 172 to the switching device 142 to obtain the voltage reference V_{REF} when the voltage reference V_{REF} is electrically coupled to the voltage input 132 of the charging interface 130.

In some implementations, the power management circuit 140 can include an analog to digital converter (ADC) 148 electrically coupled between the single output of the multiplexer 146 and the processor 170. In such implementations, the ADC 148 can be configured to convert the analog signal 180 that the multiplexer 146 outputs to a digital signal that can be processed by the processor 170.

In some implementations, the processor 170 can be configured to obtain an initial voltage measurement of the voltage reference V_{REF} when the voltage reference V_{REF} is electrically coupled to the voltage input 132 of the charging interface 130. For instance, the processor 170 can obtain the initial voltage measurement of the voltage reference V_{REF} before the electronic device 100 leaves the factory. At this time, the initial voltage measurement can correspond to the voltage reference V_{REF}. In some implementations, the processor 170 can be configured to store the initial voltage measurement of the voltage reference V_{REF}. For instance, in some implementations, the processor 170 can store the initial voltage measurement in one or more memory devices (not shown) of the electronic device 100.

After the electronic device 100 leaves the factory, the processor 170 can be configured to obtain a plurality of additional voltage measurements of the voltage reference V_{REF} when the voltage reference V_{REF} is electrically coupled to the voltage input 132 of the charging interface 130. In some implementations, the processor 170 can be configured to obtain the plurality of additional voltage measurements at predetermined intervals of time. For instance, in some implementations, the processor 170 can be configured to obtain an additional voltage measurements once a day. In alternative implementations, the processor can be configured to obtain additional voltage measurements more or less frequently.

In some implementations, the processor 170 can be configured to store one or more of the plurality of additional voltage measurements in the one or more memory devices of the electronic device 100. For instance, in some implementations, the processor 170 can store each of the plurality of additional voltage measurements. In alternative implementations, the processor can store the most recent voltage measurement of the voltage reference V_{REF} when the voltage reference V_{REF} is electrically coupled to the voltage input 132 of the charging interface 130. For instance, the processor 170 can overwrite a previously stored voltage measurement of the voltage reference V_{REF} with the current voltage measurement of the voltage reference V_{REF}. In this manner, the one or more memory devices can be freed up to store other information regarding operation of the electronic device 100.

In some implementations, the processor 170 can be configured to communicate the plurality of additional voltage measurements of the voltage reference V_{REF} to a remote computing device. For instance, in some implementations, the processor 170 can be configured to communicate the plurality of additional voltage measurements over one or more networks to a cloud computing device (e.g., server) configured to store the plurality of additional voltage measurements.

It should be understood that the processor 170 can be configured to discard any additional voltage measurements that are obtained while the electronic device 100 is being charged. More particularly, the processor 170 can be configured to discard any additional voltage measurements that are obtained while the electronic device is electrically coupled to the external power supply 110 (FIG. 1) via the conductor 120 (FIG. 1). This is because the voltage measurement of the voltage reference V_{REF} can, in such circumstances, correspond to a charging voltage (e.g., 5 Volts) that is different than the voltage reference V_{REF}. For instance, the charging voltage can be greater than the voltage reference V_{REF}

Over time, a soft short circuit 134 can develop between the voltage input 132 of the charging interface 130 and electrical ground 136. In some implementations, the soft short circuit 134 can develop due, at least in part, to the ingress of a fluid (e.g., water) into an interior 162 of the housing 160. More particularly, the fluid can enter the interior 162 via one or more opening defined for the charging interface 130. In alternative implementations, the soft short circuit 134 can develop due, at least in part to degradation in performance of a capacitor (not shown) electrically coupled between the voltage input 132 of the charging interface 130 and the electrical ground 136. For instance, the connection (e.g., solder joint) between the capacitor and the voltage input 132 or the connection (e.g., solder joint) between the capacitor and the electrical ground 136 can degrade over time, which can give rise to the soft short circuit 134.

The processor 170 can be configured to detect the soft short circuit 134 based, at least in part, on the initial voltage measurement of the voltage reference V_{REF} when the voltage reference V_{REF} is electrically coupled to the voltage input 132 and a current voltage measurement of the voltage reference V_{REF} when the voltage reference V_{REF} is electrically coupled to the voltage input 132. For instance, the processor 170 can be configured to detect the soft short circuit 134 when the current voltage measurement of the voltage reference V_{REF} is less than the initial voltage measurement by a threshold amount (e.g., 0.5 Volts).

The processor 170 can be configured to cause the electronic device 100 to perform one or more control actions in response to detecting the soft short circuit 134 at the charging interface 130. For instance, in some implementations, the one or more control actions can include automatically powering down the electronic device 100. In alternative implementations, the processor can be configured to cause a display device 190 of the electronic device 100 to display a notification to prompt a user to perform a maintenance action on the electronic device 100. In some implementations, the maintenance action can include taking the electronic device 100 to an authorized technician. Additionally, the maintenance action can include manually powering down the electronic device 100.

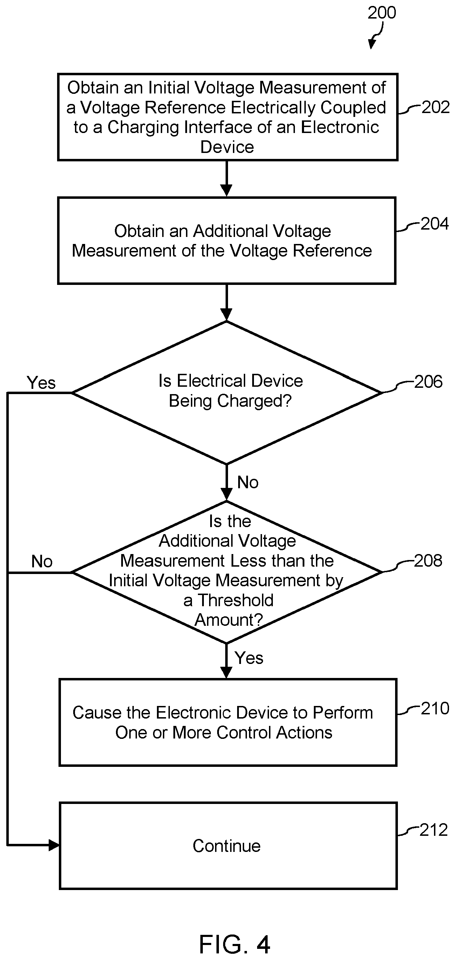

Referring now to FIG. 4, a flow diagram of an example method 200 of controlling charging of an electronic device is provided according to implementations of the present disclosure. The method 200 can be implemented by, for instance, the processor 170 of the electronic device 100 discussed above with reference to FIG. 1. FIG. 4 depicts steps performed in a particular order for purposes of illustration and discussion. Those of ordinary skill in the art, using the disclosures provided herein, will understand that various steps of the method 200 or any of the other methods disclosed herein may be adapted, modified, rearranged, performed simultaneously, or modified in various ways without deviating from the scope of the present disclosure.

At (202), the method 200 can include obtaining an initial voltage measurement of the voltage reference V_{REF} of the power management circuit 140 of the electronic device 100 when the voltage reference V_{REF} is electrically coupled to the voltage input 132 of the charging interface 130 via the switching device 142. For instance, in some implementations, the processor 170 of the electronic device 100 can provide the driving signal 172 to the switching device 142 to cause the voltage reference V_{REF} to the voltage input 132 of the charging interface 130. The processor 170 can be configured to cease providing the driving signal 172 to the switching device 142 to decouple the voltage reference V_{REF} from the voltage input 132 of the charging interface 130.

At (204), the method 200 can include obtaining an additional voltage measurement of the voltage reference V_{REF} when the voltage reference V_{REF} is electrically coupled to the voltage input 132 of the charging interface 130. For instance, in some implementations, the processor 170 of the electronic device 100 can provide the driving signal 172 to the switching device 142 to cause the voltage reference V_{REF} to the voltage input 132 of the charging interface 130. The processor 170 can be configured to cease providing the driving signal 172 to the switching device 142 to decouple the voltage reference V_{REF} from the voltage input 132 of the charging interface 130.

At (206), the method 200 can include determining whether the energy storage device 150 of the electronic device 100 is being charged by the external power supply 110. For instance, the processor 170 can be configured to compare the additional voltage measurement obtained at (204) to a charging voltage (e.g., 5 volts) of the electronic device 100. In some implementations, the charging voltage corresponds to any voltage that is greater than the initial measurement of the voltage reference V_{REF}. When the processor 170 determines the additional voltage reference obtained at (204) corresponds to the charging voltage, the method 200 can proceed to (212). Otherwise, the method 200 can proceed to (208).

At (208), the method 200 can include comparing the additional voltage measurement obtained at (204) to the initial voltage measurement obtained at (202) to detect presence of the soft short circuit 134 at the charging interface 130. For instance, the processor 170 can be configured to detect presence of the soft short circuit 134 when the additional voltage measurement is less than the initial voltage measurement by a threshold amount that is indicative of presence of the soft short circuit 134 between the voltage input 132 and the electrical ground 136. When the processor 170 determines the additional voltage measurement of the voltage reference V_{REF} obtained at (204) is less than the initial voltage measurement of the voltage reference V_{REF} by the threshold amount, the method 200 can proceed to (210). Otherwise, the method 200 can proceed to (212).

At (210), the method 200 can include causing the electronic device to perform one or more control actions in response to detecting presence of the soft short circuit 134 at the charging interface 130. In some implementations, the one or more control actions can include automatically powering down the electronic device 100. In alternative implementations, the processor 170 can be configured to cause the display screen (not shown) of the electronic device 100 to display a notification to prompt a user to perform a maintenance action on the electronic device 100. In some implementations, the maintenance action can include taking the electronic device 100 to an authorized technician. Additionally, the maintenance action can include manually powering down the electronic device 100.

At (212), the method 200 can continue. For instance, in some implementations, the method 200 can revert to (204) after a predetermined amount of time has lapsed since the most recent voltage measurement of the voltage reference V_{REF} obtained at (204). In some implementations, the predetermined amount of time can be a day (e.g., 24 hours).

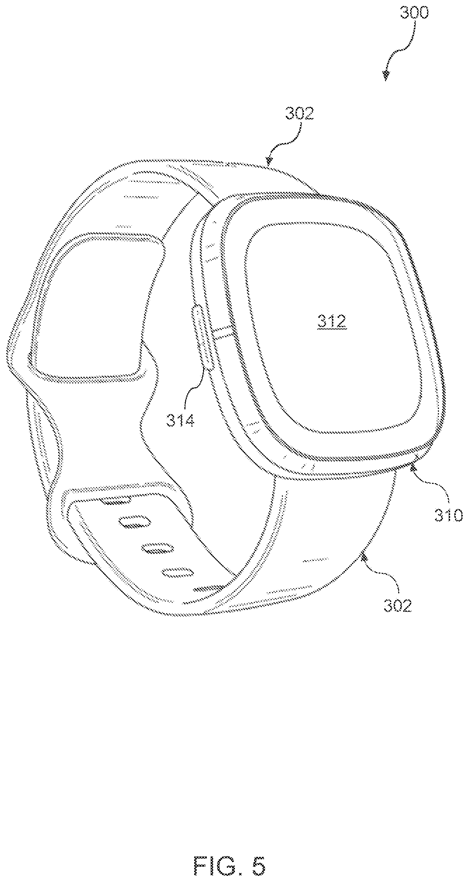

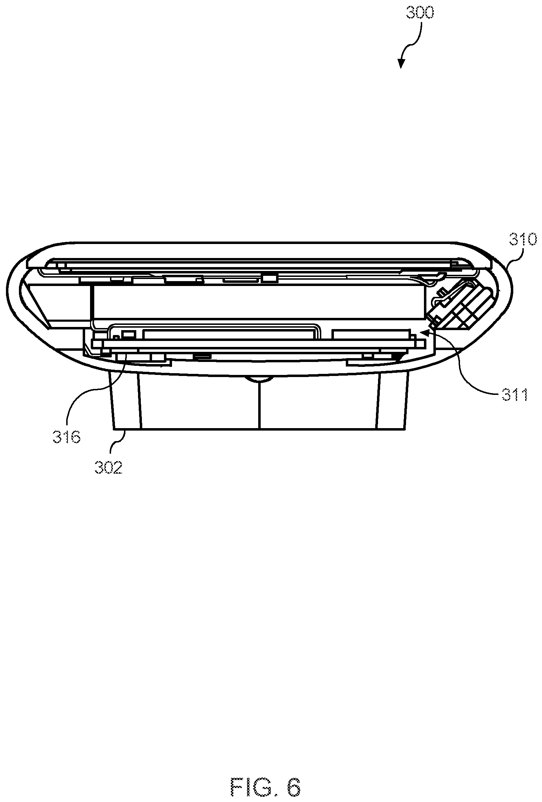

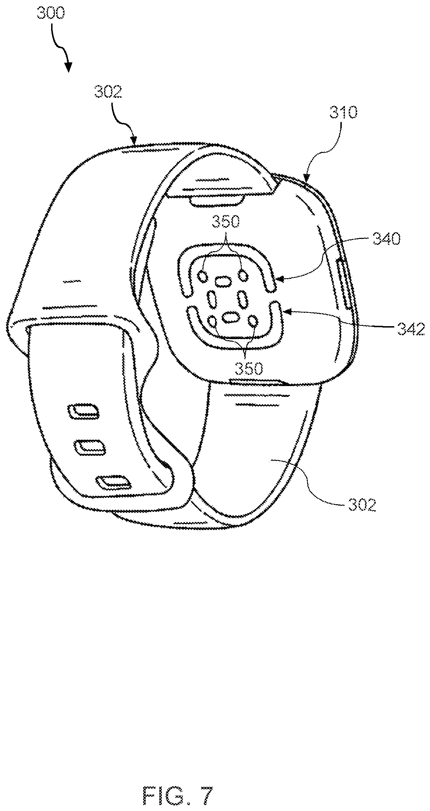

Referring now to FIGS. 5 through 7, a wearable computing device 300 is provided according to some implementations of the present disclosure. It should be understood that the wearable computing device 300 can be the electronic device 100 receiving electrical power from the external power supply 110 as discussed above with reference to FIG. 1. As shown, the wearable computing device 300 can be worn, for instance, on an arm (e.g., wrist) of a user. For instance, the wearable computing device 300 can include a band 302 and a housing 310. In some implementations, the housing 310 can include a conductive material (e.g., metal). In alternative implementations, the housing 310 can include a non-conductive material (e.g., a plastic material, a ceramic material).

The housing 310 can be coupled to the band 302. In this manner, the band 302 can be fastened to the arm of the user to secure the housing 310 to the arm of the user. Furthermore, the housing 310 can define a cavity 311 for one or more electronic components (e.g., disposed on printed circuit boards) of the wearable computing device 300. For instance, the one or more electronic components can include the power management circuit 140 discussed above with reference to FIG. 1.

In some implementations, the wearable computing device 300 can include a display screen 312. The display screen 312 can display content (e.g., time, date, biometrics, etc.) for viewing by the user. In some implementations, the display screen 312 can include an interactive display screen (e.g., touchscreen or touch-free screen). In such implementations, the user can interact with the wearable computing device 300 via the display screen 312 to control operation of the wearable computing device 300.

In some implementations, the wearable computing device 300 can include one or more input devices 314 that can be manipulated (e.g., pressed) by the user to interact with the wearable computing device 300. For instance, the one or more input devices 314 can include a mechanical button that can be manipulated (e.g., pressed) to interact with the wearable computing device 300. In some implementations, the one or more input devices 314 can be manipulated to control operation of a backlight (not shown) associated with the display screen 312. It should be understood that the one or more input devices 314 can be configured to allow the user to interact with the wearable computing device 300 in any suitable manner. For instance, in some implementations, the one or more input devices 314 can be manipulated by the user to navigate through content (e.g., one or more menu screens) displayed on the display screen 312.

The wearable computing device 300 can include an energy storage device 316 positioned within the cavity 311 defined by the housing 310. The energy storage device 316 can be configured to provide direct current power to the one or more electronics of the wearable computing device 300. For instance, in some implementations, the energy storage device 316 can be a rechargeable battery (e.g., lithium ion). It should be understood that the rechargeable battery can have any suitable rated voltage. For instance, in some implementations, the rated voltage of the rechargeable battery can range from about 1.2 Volts to about 3 Volts.

In some implementations, the wearable computing device 300 can include a first electrode 340 and a second electrode 342. It should be understood that, in alternative implementations, the wearable computing device 300 can include more or fewer electrodes. As shown, the first electrode 340 and the second electrode 342 are positioned within respective apertures (e.g., cutouts) defined by the housing 310. Furthermore, since the first electrode 340 and the second electrode 342 are both on a wrist-facing side of the wearable computing device 300, the first electrode 340 and the second electrode 342 can each contact (e.g., touch) the wrist of the user when the user is wearing the wearable computing device 300. In this manner, the first electrode 340 and the second electrode 342 can obtain data indicative of one or more biometrics (e.g., electrodermal activity, electrocardiogram) of the user.

The wearable computing device 300 can include a charging interface 350 configured to couple the wearable computing device 300 to an external power supply (e.g., wall outlet) via a conductor (e.g., charging cable). In some implementations, the charging interface 350 can include a plurality of charging pins positioned on the wrist-facing side of the wearable computing device 300. Each of the charging pins on the wrist-facing side can be electrically coupled to a corresponding contact of the conductor. In alternative implementations, the charging interface 350 can be configured as a charging port. For instance, in some implementations, the charging interface 350 can be configured as a USB charging port.

It should be understood that the wearable computing device 300 can include the power management circuit 140 discussed above with reference to FIG. 1. For instance, the power management circuit 140 of the wearable computing device can be coupled between the charging interface 350 and the energy storage device 316. It should also be understood that the power management circuit 140 can be configured to implement the method 200 discussed above with reference to FIG. 2 to control a charging speed (e.g., charging current) of the wearable computing device 300 to avoid causing the external power supply (e.g., wall outlet) to collapse (e.g., trip the circuit breaker).

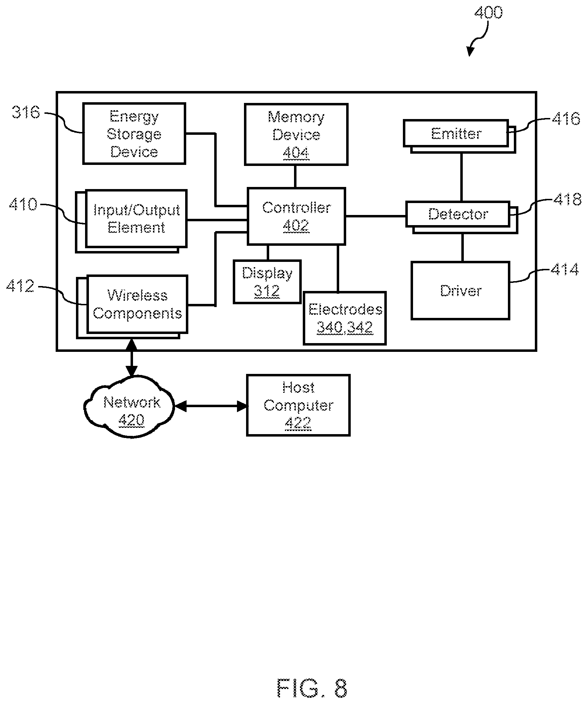

Referring now to FIG. 8, components of an example computing system 400 of the wearable computing device 300 that can be utilized in accordance with various embodiments are illustrated. In particular, as shown, the computing system 400 may also include at least one controller 402 communicatively coupled to the electrodes (e.g., first electrode 340 and second electrode 342) described above with reference to FIG. 5. Moreover, in an embodiment, the controller(s) 202 can be a central processing unit (CPU) or graphics processing unit (GPU) for executing instructions that can be stored in a memory device 404, such as flash memory or DRAM, among other such options. For example, in an embodiment, the memory device 404 may include RAM, ROM, FLASH memory, or other non-transitory digital data storage, and may include a control program comprising sequences of instructions which, when loaded from the memory device 404 and executed using the controller(s) 402, cause the controller(s) 402 to perform the functions that are described herein.

The computing system 400 can include many types of memory, data storage, or computer-readable media, such as data storage for program instructions for execution by the controller or any suitable processor. The same or separate storage can be used for images or data, a removable memory can be available for sharing information with other devices, and any number of communication approaches can be available for sharing with other devices. In addition, as shown, the computing system 400 includes the display 312, which may be a touch screen, organic light emitting diode (OLED), or liquid crystal display (LCD), although devices might convey information via other means, such as through audio speakers, projectors, or casting the display or streaming data to another device, such as a mobile phone, wherein an application on the mobile phone displays the data.

The computing system 400 can include one or more wireless networking components 412 operable to communicate with one or more electronic devices within a communication range of a particular wireless channel. The wireless channel can be any appropriate channel used to enable devices to communicate wirelessly, such as Bluetooth, cellular, NFC, Ultra-Wideband (UWB), or Wi-Fi channels. It should be understood that the computing system 400 can have one or more conventional wired communications connections as known in the art.

The computing system 400 also includes one or more power components, such as may include the energy storage device 316 operable to be recharged through conventional plug-in approaches. In some implementations, the computing system 400 can also include at least one additional I/O device 410 able to receive conventional input from a user. This conventional input can include, for example, a push button, touch pad, touch screen, wheel, joystick, keyboard, mouse, keypad, or any other such device or element whereby a user can input a command to the computing system 400. In some implementations, the I/O device(s) 410 can be connected by a wireless infrared or Bluetooth or other link as well in some embodiments. In some implementations, the computing system 400 can include a microphone or other audio capture element that accepts voice or other audio commands. For example, in some implementations, the computing system 400 may not include any buttons at all, but might be controlled only through a combination of visual and audio commands, such that a user can control the wearable computing device 300 without having to be in contact therewith. In some implementations, the I/O device(s) 410 can include one or more of the electrodes (e.g., first electrode 340, second electrode 342), optical sensors, barometric sensors (e.g., altimeter, etc.), and the like.

The computing system 400 can include a driver 414 and at least some combination of one or more emitters 416 and one or more detectors 418 for measuring data for one or more metrics of a human body, such as for a person wearing the wearable computing device 300. In some embodiments, for example, this may involve at least one imaging element, such as one or more cameras that are able to capture images of the surrounding environment and that are able to image a user, people, or objects in the vicinity of the device. The image capture element can include any appropriate technology, such as a CCD image capture element having a sufficient resolution, focal range, and viewable area to capture an image of the user when the user is operating the device. Further image capture elements may also include depth sensors. Methods for capturing images using a camera element with a computing device are well known in the art and will not be discussed herein in detail. It should be understood that image capture can be performed using a single image, multiple images, periodic imaging, continuous image capturing, image streaming, etc. Further, the computing system 400 can include the ability to start and/or stop image capture, such as when receiving a command from a user, application, or other device.

The emitters 416 and the detectors 418 may also be capable of being used, in one example, for obtaining optical photoplethysmogram (PPG) measurements. Some PPG technologies rely on detecting light at a single spatial location, or adding signals taken from two or more spatial locations. Both of these approaches result in a single spatial measurement from which the heart rate (HR) estimate (or other physiological metrics) can be determined. In some embodiments, a PPG device employs a single light source coupled to a single detector (i.e., a single light path). Alternatively, a PPG device may employ multiple light sources coupled to a single detector or multiple detectors (i.e., two or more light paths). In other embodiments, a PPG device employs multiple detectors coupled to a single light source or multiple light sources (i.e., two or more light paths). In some cases, the light source(s) may be configured to emit one or more of green, red, infrared (IR) light, as well as any other suitable wavelengths in the spectrum (such as long IR for metabolic monitoring). For example, a PPG device may employ a single light source and two or more light detectors each configured to detect a specific wavelength or wavelength range. In some cases, each detector is configured to detect a different wavelength or wavelength range from one another. In other cases, two or more detectors are configured to detect the same wavelength or wavelength range. In yet another case, one or more detectors configured to detect a specific wavelength or wavelength range different from one or more other detectors). In embodiments employing multiple light paths, the PPG device may determine an average of the signals resulting from the multiple light paths before determining an HR estimate or other physiological metrics.

Moreover, in an embodiment, the emitters 416 and detectors 418 may be coupled to the controller 402 directly or indirectly using driver circuitry by which the controller 402 may drive the emitters 416 and obtain signals from the detectors 418. The host computer 422 can communicate with the wireless networking components 412 via the one or more networks 420, which may include one or more local area networks, wide area networks, UWB, and/or internetworks using any of terrestrial or satellite links. In some embodiments, the host computer 422 executes control programs and/or application programs that are configured to perform some of the functions described herein.

While the present subject matter has been described in detail with respect to various specific example embodiments thereof, each example is provided by way of explanation, not limitation of the disclosure. Those skilled in the art, upon attaining an understanding of the foregoing, can readily produce alterations to and variations of such embodiments. Accordingly, the subject disclosure does not preclude inclusion of such modifications, variations and/or additions to the present subject matter as would be readily apparent to one of ordinary skill in the art. For instance, features illustrated or described as part of one embodiment can be used with another embodiment to yield a still further embodiment. Thus, it is intended that the present disclosure cover such alterations and variations.

## Claims

1. A computer-implemented method (200) for detecting a soft short circuit (134) at a charging interface (130, 350) of an electronic device (100), the computer-implemented method (200) comprising:
obtaining, via one or more processors (170), an initial voltage measurement of a voltage reference that is electrically coupled to the charging interface (130, 350) of the electronic device (100);
storing, via the one or more processors (170), the initial voltage measurement in one or more memory devices;
obtaining, via the one or more processors (170), an additional voltage measurement of the voltage reference;
detecting, via the one or more processors (170), the soft short circuit (134) at the charging interface (130, 350) based, at least in part, on the initial voltage measurement and the additional voltage measurement of the voltage reference; and
causing, via the one or more processors (170), the electronic device (100) to perform one or more control actions in response to detecting the soft short circuit (134) at the charging interface (130, 350) of the electronic device (100);
wherein detecting the soft short circuit (134) at the charging interface (130, 350) includes determining, via the one or more processors (170), the additional voltage measurement is less than the initial voltage measurement by a threshold amount that is indicative of existence of the soft short circuit (134) at the charging interface (130, 350).

2. The computer-implemented method (200) of claim 1, wherein the threshold amount is at least 0.5 Volts.

3. The computer-implemented method (200) of claim 1, wherein causing the electronic device (100) to perform the one or more control actions includes automatically, via the one or more processors (170), powering down the electronic device (100).

4. The computer-implemented method (200) of claim 1, wherein causing the electronic device (100) to perform the one or more control actions includes causing, via the one or more processors (170), a display screen (312) of the electronic device (100) to display a notification to prompt a user to perform a maintenance action on the electronic device (100).

5. The computer-implemented method (200) of claim 4, wherein the maintenance action includes manually powering down the electronic device (100).

6. The computer-implemented method (200) of claim 1, wherein obtaining the initial voltage measurement and obtaining the additional voltage measurement occur while a rechargeable battery of the electronic device (100) is not being charged via an external power supply (110).

7. The computer-implemented method (200) of claim 1, wherein the soft short circuit (134) at the charging interface (130, 350) corresponds to a resistance ranging from 2 ohms to 100 ohms.

8. The computer-implemented method (200) of claim 1, wherein the electronic device (100) is a wearable computing device (300).

9. An electronic device (100) comprising:
an energy storage device (316);
a charging interface (130, 350) configured to electrically couple an external power supply (110) to the energy storage device (316);
a power management circuit (140) including a voltage reference that is electrically couplable to the charging interface (130, 350); and
one or more processors (170) configured to:
obtain an initial voltage measurement of the voltage reference while the voltage reference is electrically coupled to the charging interface (130, 350) of the electronic device (100);
store the initial voltage measurement in one or more memory devices;
obtain an additional voltage measurement of the voltage reference;
detect a soft short circuit (134) at the charging interface (130, 350) based, at least in part, on the initial voltage measurement and the additional voltage measurement; and
cause the electronic device (100) to perform one or more control actions in response to detecting the soft short circuit (134) at the charging interface (130, 350) of the electronic device (100);
wherein to detect the soft short circuit (134) the one or more processors (170) are configured to determine the additional voltage measurement of the voltage reference is less than the initial voltage measurement of the voltage reference by a threshold amount that is indicative of existence of the soft short circuit (134) at the charging interface (130, 350).

10. The electronic device (100) of claim 9, wherein the power management circuit (140) includes a switching device (142) electrically coupled between the voltage reference and the charging interface (130, 350), the switching device (142) configured to selectively couple the voltage reference to the charging interface (130, 350),
wherein particularly, the switching device (142) is a transistor.

11. The electronic device (100) of claim 9, wherein the one or more control actions include automatically powering down the electronic device (100).

12. The electronic device (100) of claim 9, further comprising:
a display screen (312); and
wherein the one or more control actions include causing the display screen (312) to display a notification to prompt a user to perform a maintenance action on the electronic device (100);
wherein particularly, the maintenance action includes manually powering down the electronic device (100).

13. The electronic device (100) of claim 9, wherein the one or more processors (170) are configured to obtain the initial voltage measurement and the additional voltage measurement while the energy storage device (316) is not being charged via the external power supply (110).

14. The electronic device (100) of claim 9, wherein the charging interface (130, 350) includes a universal serial bus, USB, charging port.

15. The electronic device (100) of claim 9, wherein the energy storage device (316) includes a rechargeable battery.

## Patentansprüche

1. Computerimplementiertes Verfahren (200) zum Detektieren eines weichen Kurzschlusses (134) an einer Ladeschnittstelle (130, 350) einer elektronischen Vorrichtung (100), wobei das computerimplementierte Verfahren (200) umfasst:
Erlangen, über einen oder mehrere Prozessoren (170), einer anfänglichen Spannungsmessung einer Spannungsreferenz, die elektrisch mit der Ladeschnittstelle (130, 350) der elektronischen Vorrichtung (100) gekoppelt ist;
Speichern, über den einen oder die mehreren Prozessoren (170), der anfänglichen Spannungsmessung in einer oder mehreren Speichervorrichtungen;
Erlangen, über den einen oder die mehreren Prozessoren (170), einer zusätzlichen Spannungsmessung der Spannungsreferenz;
Detektieren, über den einen oder die mehreren Prozessoren (170), des weichen Kurzschlusses (134) an der Ladeschnittstelle (130, 350) basierend, zumindest teilweise, auf der anfänglichen Spannungsmessung und der zusätzlichen Spannungsmessung der Spannungsreferenz; und
Veranlassen, über den einen oder die mehreren Prozessoren (170), der elektronischen Vorrichtung (100), eine oder mehrere Steuerungsaktionen als Reaktion auf das Detektieren des weichen Kurzschlusses (134) an der Ladeschnittstelle (130, 350) der elektronischen Vorrichtung (100) durchzuführen;
wobei das Detektieren des weichen Kurzschlusses (134) an der Ladeschnittstelle (130, 350) ein Bestimmen, über den einen oder die mehreren Prozessoren (170), einschließt, dass die zusätzliche Spannungsmessung um einen Schwellenwertbetrag, der ein Vorhandensein des weichen Kurzschlusses (134) an der Ladeschnittstelle (130, 350) angibt, kleiner als die anfängliche Spannungsmessung ist.

2. Computerimplementiertes Verfahren (200) nach Anspruch 1, wobei der Schwellenwertbetrag mindestens 0,5 Volt beträgt.

3. Computerimplementiertes Verfahren (200) nach Anspruch 1, wobei das Veranlassen der elektronischen Vorrichtung (100), die eine oder die mehreren Steuerungsaktionen durchzuführen, ein automatisches Ausschalten, über den einen oder die mehreren Prozessoren (170), der elektronischen Vorrichtung (100) einschließt.

4. Computerimplementiertes Verfahren (200) nach Anspruch 1, wobei das Veranlassen der elektronischen Vorrichtung (100), die eine oder die mehreren Steuerungsaktionen durchzuführen, ein Veranlassen, über den einen oder die mehreren Prozessoren (170), eines Anzeigebildschirms (312) der elektronischen Vorrichtung (100) einschließt, eine Benachrichtigung anzuzeigen, um einen Benutzer aufzufordern, eine Wartungsaktion an der elektronischen Vorrichtung (100) durchzuführen.

5. Computerimplementiertes Verfahren (200) nach Anspruch 4, wobei die Wartungsaktion ein manuelles Ausschalten der elektronischen Vorrichtung (100) einschließt.

6. Computerimplementiertes Verfahren (200) nach Anspruch 1, wobei das Erlangen der anfänglichen Spannungsmessung und das Erlangen der zusätzlichen Spannungsmessung erfolgen, während eine wiederaufladbare Batterie der elektronischen Vorrichtung (100) nicht über eine externe Stromversorgung (110) geladen wird.

7. Computerimplementiertes Verfahren (200) nach Anspruch 1, wobei der weiche Kurzschluss (134) an der Ladeschnittstelle (130, 350) einem Widerstand im Bereich von 2 Ohm-100 Ohm entspricht.

8. Computerimplementiertes Verfahren (200) nach Anspruch 1, wobei die elektronische Vorrichtung (100) eine tragbare Rechenvorrichtung (300) ist.

9. Elektronische Vorrichtung (100), umfassend:
eine Energiespeichervorrichtung (316);
eine Ladeschnittstelle (130, 350), die konfiguriert ist, um eine externe Stromversorgung (110) elektrisch mit der Energiespeichervorrichtung (316) zu koppeln;
eine Leistungsverwaltungsschaltung (140), die eine Spannungsreferenz einschließt, welche elektrisch mit der Ladeschnittstelle (130, 350) koppelbar ist; und
einen oder mehrere Prozessoren (170), die konfiguriert sind, um:
eine anfängliche Spannungsmessung der Spannungsreferenz zu erlangen, während die Spannungsreferenz elektrisch mit der Ladeschnittstelle (130, 350) der elektronischen Vorrichtung (100) gekoppelt ist;
die anfängliche Spannungsmessung in einer oder mehreren Speichervorrichtungen zu speichern;
eine zusätzliche Spannungsmessung der Spannungsreferenz zu erlangen;
einen weichen Kurzschluss (134) an der Ladeschnittstelle (130, 350) basierend, zumindest teilweise, auf der anfänglichen Spannungsmessung und der zusätzlichen Spannungsmessung zu detektieren; und
die elektronische Vorrichtung (100) zu veranlassen, eine oder mehrere Steuerungsaktionen als Reaktion auf das Detektieren des weichen Kurzschlusses (134) an der Ladeschnittstelle (130, 350) der elektronischen Vorrichtung (100) durchzuführen;
wobei der eine oder die mehreren Prozessoren (170) konfiguriert sind, um zum Detektieren des weichen Kurzschlusses (134) zu bestimmen, dass die zusätzliche Spannungsmessung der Spannungsreferenz um einen Schwellenwertbetrag, der ein Vorhandensein des weichen Kurzschlusses (134) an der Ladeschnittstelle (130, 350) angibt, kleiner als die anfängliche Spannungsmessung der Spannungsreferenz ist.

10. Elektronische Vorrichtung (100) nach Anspruch 9, wobei die Leistungsverwaltungsschaltung (140) eine Schaltvorrichtung (142) einschließt, die elektrisch zwischen die Spannungsreferenz und die Ladeschnittstelle (130, 350) gekoppelt ist, wobei die Schaltvorrichtung (142) konfiguriert ist, um die Spannungsreferenz selektiv mit der Ladeschnittstelle (130, 350) zu koppeln,
wobei insbesondere die Schaltvorrichtung (142) ein Transistor ist.

11. Elektronische Vorrichtung (100) nach Anspruch 9, wobei die eine oder die mehreren Steuerungsaktionen ein automatisches Ausschalten der elektronischen Vorrichtung (100) einschließen.

12. Elektronische Vorrichtung (100) nach Anspruch 9, ferner umfassend:
einen Anzeigebildschirm (312); und
wobei die eine oder die mehreren Steuerungsaktionen ein Veranlassen des Anzeigebildschirms (312) einschließen, eine Benachrichtigung anzuzeigen, um einen Benutzer aufzufordern, eine Wartungsaktion an der elektronischen Vorrichtung (100) durchzuführen;
wobei insbesondere die Wartungsaktion ein manuelles Ausschalten der elektronischen Vorrichtung (100) einschließt.

13. Elektronische Vorrichtung (100) nach Anspruch 9, wobei der eine oder die mehreren Prozessoren (170) konfiguriert sind, um die anfängliche Spannungsmessung und die zusätzliche Spannungsmessung zu erlangen, während die Energiespeichervorrichtung (316) nicht über die externe Stromversorgung (110) geladen wird.

14. Elektronische Vorrichtung (100) nach Anspruch 9, wobei die Ladeschnittstelle (130, 350) einen Universal-Serial-Bus(USB)-Ladeanschluss einschließt.

15. Elektronische Vorrichtung (100) nach Anspruch 9, wobei die Energiespeichervorrichtung (316) eine wiederaufladbare Batterie einschließt.

## Revendications

1. Procédé mis en œuvre par ordinateur (200) de détection d'un court-circuit léger (134) au niveau d'une interface de charge (130, 350) d'un dispositif électronique (100), le procédé mis en œuvre par ordinateur (200) comprenant :
l'obtention, via un ou plusieurs processeurs (170), d'une mesure de tension initiale d'une référence de tension qui est couplée électriquement à l'interface de charge (130, 350) du dispositif électronique (100) ;
le stockage, via les un ou plusieurs processeurs (170), de la mesure de tension initiale dans un ou plusieurs dispositifs de mémoire ;
l'obtention, via les un ou plusieurs processeurs (170), d'une mesure de tension supplémentaire de la référence de tension ;
la détection, via les un ou plusieurs processeurs (170), du court-circuit léger (134) au niveau de l'interface de charge (130, 350) sur la base, au moins en partie, de la mesure de tension initiale et de la mesure de tension supplémentaire de la référence de tension ; et
le fait d'amener, via les un ou plusieurs processeurs (170), le dispositif électronique (100) à réaliser une ou plusieurs actions de contrôle en réponse à la détection d'un court-circuit léger (134) au niveau de l'interface de charge (130, 350) du dispositif électronique (100) ;
dans lequel la détection du court-circuit léger (134) au niveau de l'interface de charge (130, 350) comporte la détermination, via les un ou plusieurs processeurs (170), que la mesure de tension supplémentaire est inférieure à la mesure de tension initiale d'une quantité seuil qui indique l'existence du court-circuit léger (134) au niveau de l'interface de charge (130, 350).

2. Procédé mis en œuvre par ordinateur (200) selon la revendication 1, dans lequel la quantité seuil est d'au moins 0,5 volt.

3. Procédé mis en œuvre par ordinateur (200) selon la revendication 1, dans lequel le fait d'amener le dispositif électronique (100) à réaliser les une ou plusieurs actions de contrôle comporte automatiquement, via les un ou plusieurs processeurs (170), la mise hors tension du dispositif électronique (100).

4. Procédé mis en œuvre par ordinateur (200) selon la revendication 1, dans lequel le fait d'amener le dispositif électronique (100) à réaliser les une ou plusieurs actions de contrôle comporte le fait d'amener, via les un ou plusieurs processeurs (170), un écran d'affichage (312) du dispositif électronique (100) à afficher une notification invitant l'utilisateur à réaliser une action d'entretien sur le dispositif électronique (100).

5. Procédé mis en œuvre par ordinateur (200) selon la revendication 4, dans lequel l'action d'entretien comporte la mise hors tension manuelle du dispositif électronique (100).

6. Procédé mis en œuvre par ordinateur (200) selon la revendication 1, dans lequel l'obtention de la mesure de tension initiale et l'obtention de la mesure de tension supplémentaire ont lieu alors qu'une batterie rechargeable du dispositif électronique (100) n'est pas en charge via une alimentation externe (110).

7. Procédé mis en œuvre par ordinateur (200) selon la revendication 1, dans lequel le court-circuit léger (134) au niveau de l'interface de charge (130, 350) correspond à une résistance allant de 2 ohms à 100 ohms.

8. Procédé mis en œuvre par ordinateur (200) selon la revendication 1, dans lequel le dispositif électronique (100) est un dispositif informatique portable (300).

9. Dispositif électronique (100) comprenant :
un dispositif de stockage d'énergie (316) ;
une interface de charge (130, 350) configurée pour coupler électriquement une alimentation externe (110) au dispositif de stockage d'énergie (316) ;
un circuit de gestion de l'alimentation (140) comportant une référence de tension qui peut être électriquement couplée à l'interface de charge (130, 350) ; et
un ou plusieurs processeurs (170) configurés pour :
obtenir une mesure de tension initiale de la référence de tension pendant que la référence de tension est couplée électriquement à l'interface de charge (130, 350) du dispositif électronique (100) ;
stocker la mesure de tension initiale dans un ou plusieurs dispositifs de mémoire ;
obtenir une mesure de tension supplémentaire de la référence de tension ;
détecter un court-circuit léger (134) au niveau de l'interface de charge (130, 350) sur la base, au moins en partie, de la mesure de tension initiale et de la mesure de tension supplémentaire ; et
amener le dispositif électronique (100) à réaliser une ou plusieurs actions de contrôle en réponse à la détection du court-circuit léger (134) au niveau de l'interface de charge (130, 350) du dispositif électronique (100) ;
dans lequel, pour détecter le court-circuit léger (134), les un ou plusieurs processeurs (170) sont configurés pour déterminer que la mesure de tension supplémentaire de la référence de tension est inférieure à la mesure de tension initiale de la référence de tension d'une quantité seuil qui indique l'existence du court-circuit léger (134) au niveau de l'interface de charge (130, 350).

10. Dispositif électronique (100) selon la revendication 9, dans lequel le circuit de gestion de l'alimentation (140) comporte un dispositif de commutation (142) couplé électriquement entre la référence de tension et l'interface de charge (130, 350), le dispositif de commutation (142) étant configuré pour coupler sélectivement la référence de tension à l'interface de charge (130, 350),
dans lequel, en particulier, le dispositif de commutation (142) est un transistor.

11. Dispositif électronique (100) selon la revendication 9, dans lequel les une ou plusieurs actions de contrôle comportent la mise hors tension automatique du dispositif électronique (100).

12. Dispositif électronique (100) selon la revendication 9, comprenant en outre :
un écran d'affichage (312) ; et
dans lequel les une ou plusieurs actions de contrôle comporte le fait d'amener l'écran d'affichage (312) à afficher une notification invitant un utilisateur à réaliser une action d'entretien sur le dispositif électronique (100) ;
dans lequel, en particulier, l'action d'entretien comporte la mise hors tension manuelle du dispositif électronique (100).

13. Dispositif électronique (100) selon la revendication 9, dans lequel les un ou plusieurs processeurs (170) sont configurés pour obtenir la mesure de tension initiale et la mesure de tension supplémentaire alors que le dispositif de stockage d'énergie (316) n'est pas chargé via l'alimentation externe (110).

14. Dispositif électronique (100) selon la revendication 9, dans lequel l'interface de charge (130, 350) comporte un port de charge de bus série universel, USB.

15. Dispositif électronique (100) selon la revendication 9, dans lequel le dispositif de stockage d'énergie (316) comporte une batterie rechargeable.
